# EUROPEAN PATENT APPLICATION

(11) **EP 2 134 042 A1**
(43) Date of publication of application: **16.12.2009**
(21) Application number: 09007671.2
(22) Date of filing: 10.06.2009
(51) Int. Cl.: H04L 12/58, G06Q 10/00

(54) **Email handling system comprising meta-data storage**

(30) Priority: 12.06.2008 US 131821 P
(71) Applicant: Koninklijke KPN N.V., 2516 CK The Hague (NL)
(72) Inventor: Thie, Martijn Ruben Leander, 9761 JT Eelde (NL)
(74) Representative: Wuyts, Koenraad Maria

(57) **Abstract**

An email handling system (100) comprising an email receiving device (110) for receiving an email (105) having meta-data, the meta-data comprising at least a recipient, a storage device (135) for storing the email wherein, the system further comprises a meta-data extractor (120) for obtaining the meta-data from the email, and a storage handier (120) for storing in a recipient's mailbox the meta-data and a pointer to the email in the storage device.

## Description

### FIELD OF THE INVENTION

The invention relates to an email handling system comprising an email receiving device for receiving an email having meta-data, the meta-data comprising at least a recipient, and a storage device for storing the email.

The invention also relates to a method of handling email, and to a corresponding computer program

### BACKGROUND OF THE INVENTION

Operating an email platform is a service, which although expected from an Internet Service provider or other email service provider, may be expensive to operate. Known email platforms allocate for each user a personal email box. After an email has been received it is stored for each recipient in that recipient's email box. Dedicated physical storage is allocated to a person's email box, requiring expensive storage space. Moreover, an email may be stored multiple times in case the email has multiple recipients on the same domain.

Known email platforms are quite complex, having complex email handling, that is, for each incoming email first the corresponding email box has to be found, and only then the email is stored in that email box. In the meantime the email must be stored somewhere in temporary storage. This leads to time-consuming file transfers.

Drawbacks of known email platforms include that they require maintenance and support, use a lot of hardware, and it is difficult to stay compliant to local law.

It is a problem of known email platforms that they incur a large overhead to receive and store an email.

### SUMMARY OF THE INVENTION

It is an object of the invention to reduce the overhead when receiving and storing an email on an email handling system.

This and other objects are achieved by an email handling system according to the invention. The email handling system comprises an email receiving device for receiving an email having meta-data, the meta-data comprising at least a recipient, and a storage device for storing the email. The system further comprises a meta-data extractor for obtaining the meta-data from the email, and a storage handler for storing in a recipient's mailbox the meta-data and a pointer to the email in the storage device.

The incoming email is stored directly on hardware storage, without any mail-box look up, then only the meta-data of this email is processed. On the other hand, some mail-box look up, may done, e.g., to handle requirements of the SMPT protocol. This processing may be done asynchronously with respect to the storage, hence the email reception and the processing are decoupled, resulting in an efficient, less hardware intensive, and transparent process. Moreover, only the metadata needs to be processed, resulting in less data flow, the email itself remains on the storage, and need not be moved from the disk. Therefore, this process is more hardware efficient. Because the email is not stored in a personal email box, there is no need for dedicated physical storage allocated to a person's mailbox, saving expensive storage space. Using metadata, the original email is stored only once, also if the email has multiple recipients on the same domain, which also saves disk-space.

The overhead of handling incoming e-mail is reduced in at least two ways. First of all, an incoming email can be stored at its definitive storing place immediately after receiving the email. There is no need to first obtain the recipients email box. Second, apart from storing the incoming email, handling incoming email only operates with its meta-data. Since meta-data is smaller than the corresponding e-mail, its processing happens faster compared to processing the email together with the meta-data. For example, file transfers, reading the meta data, displaying the meta-data, etc, work on smaller files which require fewer read and/or write operations.

The email receiving device may be any SMTP server capable of receiving email. The storage device may be any suitable mail server. For example, incoming email may be stored in a drop folder which points through a symbolic link to a share on the mail file server. A resource manager may mange the storage on the mail server. It is an advantage that the incoming email may directly be stored without the need to first find the correct recipient mail box. All email may be stored together in one large mail storage facility. In this way the act of storing the mail and of the processing the meta data and updating the recipient's mailboxes may be done independent from each other, in an asynchronous fashion. This facilitates the scaling of the system and reduces overhead. The meta data may be extracted from the email in any known fashion, e.g., through parsing of the mail file. In practice this task may be performed by the storage handler.

The email may be sent to the system for handling from any device suitable for sending email, including computers, mobile phones, etc. The email may also be sent by an automated system, e.g., for automatically generated messages or reports. The email may be composed using an email client, such as outlook, thunderbird etc. The email may also be composed by other means, e.g., using a contact form on a web site. In the latter the case the message may be converted to email and sent via conventional email forwarding and/or routing facilities. On the other hand, the message may also not be converted to email but forwarded to the email handling system via other means, for example, using proprietary protocols. What is needed to use the invention is a data file, such as a text file, such as email, coupled to a destination address on the handling system, e.g., a recipient. The data file may be stored in storage, e.g. sequential storage, independent from the destination address. A pointer, possibly together with other meta data, such as data file type and data file size, may be stored in an index file, e.g. a recipient's mailbox, which is particular for the destination address. The data file, e.g., the email, may conform to a syntax which allows it to be parsed. A parser, e.g., meta data extractor, is capable of obtaining the components parts of the meta data as indicated by the syntax. The meta-data found in the email may be supplemented by the system with meta-data coming from other sources, e.g., time of arrival, size of the email, size of attachments, etc.

The pointer may, e.g., be a file name and/or an offset to indicate the place were the email is stored. The storage may also be file system, possibly optimized for fast storing and/or deleting of small files. The storage may also be a database, using as pointer an indication of an item in the database.

It is observed that the storage device for storing the email may be a different storage device as the one storing the recipient's mailbox. In particular the recipient's mailbox is preferably stored independent and/or apart from the email. The recipient's mailbox preferably stores only the meta-data of the email and no other parts of the email. In an embodiment some other parts of the email, such as key words, may be stored in the mailbox.

In an embodiment, the meta-data comprises a further recipient. The storage handler is arranged for storing in a further recipient mailbox the meta-data and a pointer to the email in the storage device. It often happens that a mail is sent to more than one user on the same domain. In known email handling system this results in two copies of email being stored on the system. Each one of the recipients receives a copy of the email in his or her email box. However in the system according to the invention the email needs to be stored only once. In the mailboxes of the recipients only some meta data and a pointer, which is typically much smaller than the e-mail, needs to be stored. That both the recipient's mailbox and the further recipient's mailbox will comprise a reference to the same single email file.

In an embodiment, the storage device is configured for storing the email independent from the recipient.

It is an advantage if the email can be stored without the need to know at that point who the recipient is. When an email arrives at the system, the email can be stored in mass storage, possibly directly at the definitive storage location on the storage device. This avoids the need of buffering the email. Moreover, the process which discovers the recipient and the process of storing the email are in this way independent. This means that the storage device can operate independently from the meta-data extractor. This simplifies the design and makes scaling of the system easier. It also allows for parallel and asynchronous handling of storing and meta-data extraction.

It is noted that the invention may also be used for email having attachments. For example, the email and the attachment may be stored using the storage device independent from the recipients. In one embodiment an attachment-pointer is stored in the recipient's mail box. In another embodiment, the email is stored along with the attachment. The email may also be stored with an attachment-pointer.

In an embodiment, the meta-data comprises at least one of the following fields: Sender, Subject Header, From Header, To Header, CC Header, email size, and an indication whether the email has files attached.

The meta data that is saved in the mailbox preferably allows most of the email handling operations which do not need access to the email itself. For example, browsing an inbox, to see from whom one has received email can be done with access to the Subject Header and the From Header. Also operations that need access to the email itself can be prepared without the email. For example, to forward an email to a recipient outside of the system, a user can use his mailbox to select the correct email and give the forward command to the system. At a later moment, for example, when the load on the outbound SMPT server is low, the system can fetch the email indicated by the user and execute the forward. Only at the latter moment is the actual content of the email needed to complete the operation. It is observed that the forward may also be done immediately.

In an embodiment, the email handling system comprises an email server through which a client can obtain stored email from the system, e.g., a POP3 server, configured to obtain the pointer from the recipient's mailbox, and to obtain the email from the storage device based on the pointer.

The Post Office Protocol version 3 (POP3) is an application-layer Internet standard protocol which may be used by local e-mail clients to retrieve e-mail from a remote server, e.g., the email handling system, over a connection, such as an TCP/IP connection.

This embodiment has the advantage that handling of the protocol, e.g., the POP3 protocol, can be processed independently from the handling of the storage. In known systems, where all email is stored in one large file, a lot overhead is incurred by scanning through the large file looking for the correct email to upload to the user. Using the invention, one may scan through the smaller mail box instead. This will go much faster. The actual fetching of the email may be delegated to a specialized process, e.g., server. This makes for a more modular and thus simpler design. Also it scales better.

In an embodiment, the email handling system comprises a web mail server configured to obtain the meta-data from the recipient's mailbox, and to display at least part of the meta-data.

When using web mail the advantages are even more pronounced. When using web mail it is common for a user to look at a web page which shows email of his which is stored at the system. The entire web page may be constructed only with access to the mail box. To view such an index page access to the actual contents of the email is not needed, as the meta-data is stored separately. It is noted that it may be desired to have an email handling system which only provides web mail services, and which doesn't support automatic retrieval of email, e.g., through the POP3 protocol.

In an embodiment, the web mail server is further configured to obtain the pointer from the recipient's mailbox, to obtain the email from the storage device based on the pointer, and to display the email.

Since a pointer is available, the email can be fetched efficiently, without the need to scan through large file storage.

In an embodiment, the system is configured to receive a delete command for the email, system being configured to remove the meta-data and the pointer from the recipient's mailbox.

Using the configuration as in the invention, email may be deleted from view of a user very efficiently. In a conventional system, an email resides somewhere in the middle of a large email box file, holding multiple emails. To delete the email, the system needs to remove part of a file which is located half way in the file. Such an operation is inefficient in many file systems. In the invention, only a reference needs to be removed from a much smaller file. Note that at this point the email itself may still reside on the system; it has only been removed from view of the user. Note that if the email had multiple recipients, the email would still be visible by the other recipients. When all recipients have removed the email pointer from their mail boxes, the email can be removed from the storage device. Note that the latter operation need not be done immediately, but may be scheduled to occur later, e.g., in batches, for example, during a nightly clean up procedure. By batching the inefficient operation during a time when the system only slightly used, the overhead of deleting is mitigated.

In an embodiment, the system is configured to receive a forward command for the email to a forward-recipient, and wherein the storage handler is configured for storing in the forward- recipient's mailbox and the pointer to the email in the storage device. The storage handler may also be configured for storing for storing in the forward-recipient's mailbox the meta-data.

Forwarding of email to other users of the same email handling system is efficient since no handling of the email content itself is needed. Only a pointer indicating the email must be transferred. This avoids handling, copying, etc, of the email itself.

In an embodiment, the email handling system is configured for storing the email before extracting the meta-data.

By storing the email and the meta-data independent from each other, e.g., in separate files, the incoming email may be stored immediately upon arrival. There is no need to first extract the meta-data in order to determine where the email must be stored. The storage location of the email can be determined before the email arrives. For example, the storage system may maintain a pointer to the first free allocatable block of storage, after the email arrives it can be written to the place indicated by the pointer immediately.

In a known email-handling system, the email is stored in user-specific email box. To find the correct e-mail box it is necessary to extract the meta-data and from there determine the recipient. Knowing the recipient the correct email box is found and then the email can be stored. However in the invention, the email may be stored in any kind of storage system, preferably, in a mass storage device without knowing the recipient. After the e-mail has been stored the email-handling system according to the invention may extract meta-data and determine the recipient and update the recipient's mail-box.

For example, in an embodiment, the email handling system comprises a pointer-buffer for buffering the pointer to the email.

Incoming e-mail may be stored independently from the meta-data extraction. Since the meta-data extraction and the email storage may work independent from each other they may also operate at different speeds. For example, email may be stored as soon as it arrives but the meta-data extraction may be done later. This has the advantage that the resources used for meta-data can be smaller. If meta-data extracting can be postponed then its processing may be spread in time more evenly. Hence there is less need to accommodate peaks in the incoming email. This allows smaller resources for the same capacity. It also allows a more robust system. If the amount of incoming email, and hence the amount of meta-data extracting work that needs to be done is at some point larger than anticipated, then a known system may respond by dropping email, or worse, crashing altogether. An email handling system according to the invention, however, can handle the peak in the load by spreading the extraction work in time.

A pointer buffer helps to accomplish this. After an email arrives in the system, it may be stored immediately by the storage device. A pointer to the position of the email in storage is written to the pointer buffer, e.g., by the storage system. The pointer buffer may be implemented as a queue data structure. Independent from the storage system the meta-data extractor may poll the pointer buffer to see if it contains any pointers. If the meta-data extractor is in a position to handle incoming email, he may take a pointer from the pointer-buffer, e.g. the head of the queue, obtain the email from storage using the pointer, extract the email's meta-data, and update the corresponding recipient's mailbox. In the meantime, the email remains in storage and does not need to be moved. When the meta-data extractor is finished the pointer may be removed from the pointer buffer. In case email arrives at a faster rate than the meta-data extractor can handle, the pointer buffer will grow and contain more than one pointer. The backlog in pointers can be handled by the meta-data extractor at any convenient time, e.g., at night.

A further aspect of the invention concerns a method of handling email. The method comprises receiving an email having meta-data, the meta-data comprising at least a recipient and storing the email in a storage device. The method further comprises extracting the meta-data from the email, and storing in a recipient's mailbox the meta-data and a pointer to the email in the storage device. A person skilled in the art is capable of extending the method with steps corresponding to elements of devices according to the invention, and vice-versa.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc.

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:

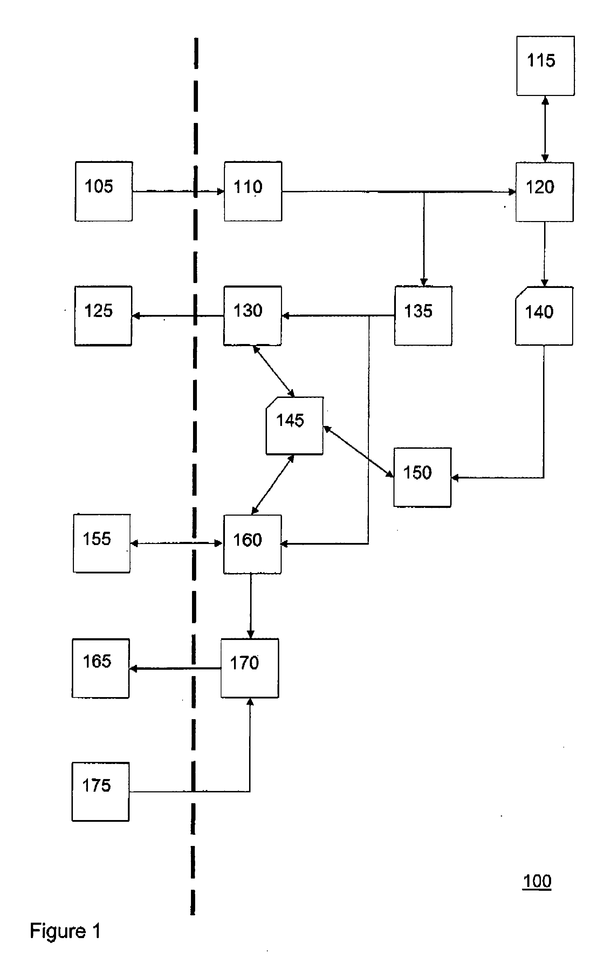

Figure 1 is a block diagram illustrating an embodiment of the email handling system according to the invention.
Throughout the Figures, similar or corresponding features are indicated by same reference numerals.

### List of Reference Numerals:

- 100: email handling system
- 105: external email arriving on the platform
- 110: inbound SMTP server
- 115: resource manager
- 120: store handler
- 125: user with POP3 client
- 130: POP3 server
- 135: mail server
- 140: XML mailbox
- 145: XML mailbox
- 150: XML file server
- 155: user with internet browser
- 160: web mail server
- 165: outbound email
- 170: outbound SMTP server
- 175: user with SMPT client

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

Figure 1 illustrates in the form of a block-diagram an email handling system 100 and gives a functional overview diagram. Email handling system 100 handles incoming email, storing email, and handling thereof. Email handling system 100 may, e.g., be used in a consumer market. It may be built from a combination of building blocks and custom code.

Every function of email handling system 100 can be scaled separately which leads to a simplified design. The concept of mailbox stores, storing all email of a particular user together, can be avoided in this embodiment. Instead email handling system 100 uses a file store to store all email files. Not per mailbox but per storage block. So that storage can be scaled independently of the rest of the platform.

The mailbox is represented as an XML file 140. This XML mailbox file contains all meta data of the mailbox as well as the meta data of the emails stored for that mailbox. Not the email data by itself, but a reference to the email file is stored into the mailbox file. The mailbox file itself is stored on plain file storage. This storage can also be scaled independently of the rest of the platform.

Email 105 enters the platform from the internet through an array of SMTP servers 110. The SMTP server receives the mail from the internet and stores the mail directly on the mail file server 135.

As soon as the email file 105 is stored, it's picked-up by the store-handler 120. The store-handler 120 inspects the email file 105 and updates the XML mailbox files 140 of the recipients. It also handles all additional mail services, such as email forwarding, copy forwarding, legal interception, junk mail-folder handling and so forth.

An end-user can retrieve his mail from the platform using POP3 or web mail. For both methods enough meta information is stored in the XML mailbox files so that they never need to open the actual email files to provide the client with information. Only when the actual email is sent to the client the email file is opened and read. After the file is read and the end-user decides to delete the file, only the reference to the email file 105 within the XML mailbox file 140 is removed. After all references to that particular email file are deleted, the actual email file 105 itself is deleted and storage is freed.

Advantageously, all mailboxes are the same and are handled the same. Branding can be done but only within the parameters of the functionality of the entire mail platform. For example, you can have a different look-n-feel for web mail or have larger mailboxes for some brands. Keeping the design simple is cost-effective and maintainable.

We proceed with a description of the elements of email handling system 100 shown in figure 1. External mail 105, e.g. internet mail, arrives on the platform through the inbound SMTP servers 110. External mail 105 is forwarded to SMTP server 110. Plain SMTP 110 has a drop folder pointing to a symbolic link, e.g. NTFS, pointing to a share on the mail file server 135. The mail file server 135 is where all the mail is dropped. It consists of SAN storage (Storage-Area-Network) publicized through junction points. It is observed that other types of email storage are also possible. The email 105 is also sent to a store handler 120. The store handler 120 has a file system hook on the mail file servers 135. When new mail arrives an event is fired to the store handler 120. The store handler 120 examines the mail and finds the appropriate mailbox-xml files, e.g., XML mailbox 140. If the recipient's total mail storage is above the set mailbox-quota, an NDR is sent back to the sender. Store handler 120 changes the SMTP drop folder path when the storage is nearly consumed. A resource manager 115 is connected to the store handler 120. The store handler 120 claims a chunk of storage, e.g., for emails, at the resource manager 115. When the chunk is consumed, the store handler 120 can claim a new chunk.

The mailbox 140 is nothing more than a plain XML file with reference to the mail-files on the mail file server 135. Also additional meta info is kept here, such as: mailbox size, total number of mail, total size of mail, folders and structures. Also meta info about all the mail messages is kept here, such as: subject, sender, size, date, and other recipients.

An XML server 150 has access to mailbox 140. XML server 150 has SAN storage and is only used to store the xml mailbox files. It is connected to Pop3 server 130 and web mail server 160 so that they have access to xml mailbox 145. Xml mailbox 145 may be copy of mailbox 140, or it may be access through other means, e.g., through a symbolic link.

Pop3 server 130 is connected with mail server 135 and xml server 150. Authentication and authorization is checked without any LDAP query. POP3 accesses the xml-mailbox file to list the inbox and the meta data info of the messages. Only when an email has to be sent, it opens the actual mail-message file. For example, by opening the email 150 on storage 135.

User 125 with an outlook, outlook express, or any other POP3 client can retrieve their mail through the POP3 server 130. Instead of POP3 any other mail protocol may be used that allows a user to retrieve his email.

User 155 can use web mail to send, read and manage his email with any internet browser from anywhere in the world. This may be protected with SSL. The browser connects to web mail server 160.

Web mail server 160 is connected to mail file server 135 and to XML file server 150. Authentication and authorization is checked without any LAP query. Web mail accesses the xml-mailbox file to display the folders and the meta info of the messages. Only when an email has to be displayed, it opens the actual mail-message file. Newly created messages are sent through the outbound SMTP 170.

Outbound SMTP server 170 is connected to web mail server 160. Outbound SMTP server 170 sends an outbound email 165 to the internet.

User 175 with an Outlook, outlook express, or any other SMPT client, can send their mail through outbound SMTP server 170.

The **SMTP inbound servers 110** receive all email from the internet. This is a plain SMTP server with all ExtendedSMTP functionalities and is capable of high load.

When the email has arrived and protocol is handled, the email file is stored in the Drop folder, which is a symbolic-link (NTFS) pointing to a share on the mail file server 135. By doing so, a file hook on the drop folder raises an event for the Store handler 120. It is also possible to use other storage means, e.g., without using a symbolic link. For example, a dynamic pointer may be kept, pointing to the next bit of free storage.

There is only one optional sink on this server, being a protocol sink which does a XML mailbox file look-up on the inbound command "RCPT TO", to find out if it can accept mail for that mailbox. If it can accept mail for that mailbox the system can acknowledge this. Notice that this is not a traditional mail-box look-up. Access to previously received and stored messages is not needed. This XML-mailbox file look-up is optional in this stage, because it can also be done later by the store handler. Adding this look-up at this stage makes system 100 compliant with the SMTP protocol.

Because no additional transport sinks are bound to this server, it can handle twice the load of our current severs and has none of the memory-leak problems.

During the handling of the protocol, it checks all recipients for existence by checking on the file servers that the specific XML mailbox file exists. If a recipient doesn't exist, the recipient is rejected during the handling of the SMTP protocol.

**Store handler 120** is the main engine of the email platform. It can be programmed as a plain Windows Service (or it can be programmed in another programming language) and resides on the same machine as the SMTP server. So every SMTP Inbound server has its own store handler 120 service. Store handler 120 receives the event from the file hook on the drop folder of the SMTP when a new email has arrived. It opens the email file and examines the contents. The SMTP envelope parameters which define the actual sender and recipients are also stored in the email file. The store handler 120 reads at least the following information from the email file to store into the XML mailbox files of the recipients:
- Sender (from SMTP envelope)
- Recipients (from SMTP envelope)
- Subject Header
- From Header
- To Header
- CC Header
- Email size
- Has files attached

Now, per recipient, it opens the XML mailbox file. It reads the mailbox meta data from the mailbox file. At least the following fields:
- Quota limit
- Mailbox size
- Number of messages
- Has JunkMail folder
- Has Forward
- Has CopyForward
- Has Legal Interception

First it checks if the new email size fits into the mailbox by checking the quota limit against the Mailbox size plus the email size. If the message is too large to fit within the mailbox, a Non Delivery Report (NDR) is sent to the Sender of the original email stating that the mailbox is full. This is not done during SMTP protocol handling because it would have too much impact on the load. To achieve such a check during protocol handling would require an additional sink. Therefore the impact of sending NDRs for full mailboxes is lower.

When email files are put in the drop folder, disk space is consumed. Store handler 120 maintains the storage resource for the accompanied SMTP server. When almost all available storage is consumed, it requests (reserves) a new chunk of storage at the resource manager 115. The resource manager 115 provides a path to the mail file server 135 to store the email files for that chunk and the Store handler 120 changes the symbolic-link of the drop folder to that path. This way, new storage is provided to the SMTP server.

Now the XML mailbox files of the recipients are updated with the meta data of the email (including a list of all recipients of the email) and a reference (file path) to the email file.

Additionally the Store handler 120 can perform some maintenance tasks upon receiving email, like deleting expired spam form the junk-mail folder. The mail file server 135 uses a (clustered) disk which has junction-points to all available SAN storage. A path on the (dustered) disk could look somewhat like the following examples:
- E:\StoreRoot\ Junction1\MailRoot1\mailfile.eml
- E:\StoreRoot\ Junction1\MailRoot2\mailfile.eml
- E:\StoreRoot\ Junction2\MailRoot2\mailfile.eml

Where
- The StoreRoot is the main root of all email.
- The Junction is the hard link to a 2 Terabyte SAN disk (so, no drive letter).
- The MailRoot is the storage chunk which is provided for mail storage.

**The resource manager 115** manages the storage resources by reserving chunks of storage for the store handler 120. When the Store handler 120 requests a new chunk of storage, the resource manager 115 checks which Junction is not in use and has sufficient storage left. Then it passes a pointer to the Junction folder back to the Store handler 120. The store handler 120 can use this resource until he has consumed all (said to be) available data.

When a POP3 server or a Web mail server deletes an email file, it also signals the resource manager 115 of the amount of data that is freed.

**XML File Server 150** is the server where the XML mailbox files are stored. The XML mailbox files are named after the mailbox address. For example:
- m.thie@hetnelnl.mbx
- thie01@planet.nl.mbx

To aid humans in finding the correct XML mailbox file (for operational support), the files are stored in subfolders. The names of the subfolders all have the length of three characters, which are the first three characters of the mailbox name. For example:
- E:\MbxRoot\m.t\m.thie@hetnet.nl.mbx
- E:\MbxRoot\thi\thie01@planet.nl.mbx

Aliases are also XML mailbox files, but only contain a reference to the actual mailbox name. Catch-all mailbox files can be denoted as @domain.com.mbx filenames. They are placed in a separate mbx root folder and the subfolders are named after the first three characters of the domain name. For example:
- E:\CARoot\dom\@domain.com.mbx
- E:\CARoot\dom\@dombo.nl
- E:\CARoot\thi\@thie.nl.mbx

**The POP3 Server 130** can find all the information it needs within the XML mailbox file to handle the full POP3 protocol. Only when sending the email (or top of the email) to the client, it opens the actual email file (non exclusive for reading).

When the POP3 server gets a delete command from the client, it does not delete the actual email file but removes the reference from the XML mailbox file. It then checks (from the meta data in the reference) which other recipients have received the email and sequentially goes through their XML mailbox file to check if the email file is still referenced by that recipient. Only when it doesn't find any references, the actual email file is deleted and the resource manager 115 is signaled. POP3 server only serves mail from the inbox folder. Optionally, the POP3 server could also serve mail from other folders.

**Web mail Server 160** performs mostly the same steps as the POP3 server does. With the differences that the Web mail server can:
- Move mail between folders
- View mail in other folders than the inbox (i.e. spam-folder)
- Create and send new email messages

When new mail is created and sent by the user, the Web mail server sends the email through the Outbound SMTP.

When a user deletes mail from any folder except the "Deleted Items" folder, the mail doesn't get deleted but moved to the "Deleted Items" folder by changing the folder attribute of the email reference in the XML mailbox file. So a reference to that mail is still present and the actual email file does not get deleted. When a user finally deletes mail from the "Deleted Items" folder, the reference is removed, actual email file is deleted and the resource manager 115 is signaled.

For example, the web mail server may construct an HTML page comprising an index of new email messages. For example a list like the one below may be constructed and displayed to the user.

| From | Date | Size | Subject |
|---|---|---|---|
| Saskia | May 3, 2009 | 7.1k | Hello |
| Peter | May 2, 2009 | 41k | How are you? |

Note that the user only sees meta-data from the email, such as a from field (who sent the email), a date field, the size of the email and the subject line. Note also that the system converted email addresses which were found in the email's meta-data to human understandable aliases. This conversion may take place in the meta-data extractor, or later when the page is constructed from the mail box. The conversion is optional, and, e.g., email addresses may be used instead. Note that this page is constructed from the mail box without access to the email content itself. This is efficient since a mail box comprising mostly meta-data is smaller than a file comprising all data, including meta-data and email content data. By using a mailbox which does not contain the bodies of emails, access to the meta-data is faster. Building up an html overview of which emails are available is faster and better scalable.

**Outbound SMTP server 170** is a plain SMTP server with no add-ons whatsoever. It can be configured to pass all outgoing email through the Email scrubbing service (EWS). The EWS can then scan all outbound email for virus or spam.

**XML Mailbox File 140** is a meta base for one mailbox. The following is an example of such a file, but is not meant as a description for the actual file as it does not contain al necessary meta data.

```
 <MBX name="m.thie@hetnet.nl">
   <SIZE used="" quota="20971520" />
   <FOLDERS>
     <FOLDER name="inbox" used="0" msgcount="0" unreadcount="0" />
     <FOLDER name="spam" used="0" msgcount="0" unreadcount="0" />
     <FOLDER name="sent items" used="0" msgcount="0" unreadcount="0" />
     <FOLDER name="deleted items" used="0" msgcount="0" unreadcount="0"
 />
   </FOLDERS>
   <MESSAGES>
     <MESSAGE subject="your mail" size="1024" from="me@you.com"
 folder="inbox" />
     <MESSAGE subject="my mail" size="1024" from="you@me.com"
 folder="inbox" />
     <MESSAGE subject="hot girls" size="1024" from="ad@kpn.com"
 folder="spam" />
     <MESSAGE subject="mail" size="25" from="mc@you.com"
 folder="deleted" />
   </MESSAGES>
 </MBX>
```

## Claims

1. An email handling system (100) comprising
- an email receiving device (110) for receiving an email (105) having meta-data, the meta-data comprising at least a recipient,
- a storage device (135) for storing the email
wherein, the system further comprises
- a meta-data extractor (120) for obtaining the meta-data from the email, and
- a storage handler (120) for storing in a recipient's mailbox the meta-data and a pointer to the email in the storage device.

2. An email handling system as in claim 1, wherein the meta-data comprises a further recipient, and wherein the storage handler is arranged for storing in a further recipient mailbox the meta-data and a pointer to the email in the storage device.

3. An email handling system as in any one of the preceding claims, wherein the storage device is configured for storing the email independent from the recipient.

4. An email handling system as in any one of the preceding claims, wherein the meta-data comprises at least one of the following fields: Sender, Subject Header, From Header, To Header, CC Header, email size, and an indication whether the email has files attached.

5. An email handling system as in any one of the preceding claims, comprising an email server (130) through which a client can obtain stored email from the system configured to obtain the pointer from the recipient's mailbox, and to obtain the email from the storage device based on the pointer.

6. An email handling system as in any one of the preceding claims, comprising a web mail server (160) configured to obtain the meta-data from the recipient's mailbox, and to display at least part of the meta-data.

7. An email handling system as in claim 6, wherein the web mail server is further configured to obtain the pointer from the recipient's mailbox, to obtain the email from the storage device based on the pointer, and to display the email.

8. An email handling system as in any one of the preceding claims, wherein the system is configured to receive a delete command for the email, and wherein the system is configured to remove the meta-data and the pointer from the recipient's mailbox.

9. An email handling system as in any one of the preceding claims, wherein the system is configured to receive a forward command for the email to a forward-recipient, and wherein the storage handler is configured for storing in the forward-recipient's mailbox the pointer to the email in the storage device.

10. An email handling system (100) as in any one of the preceding claims, configured for storing the email before extracting the meta-data.

11. An email handling system (100) as in claim 10, comprising a pointer-buffer for buffering the pointer to the email.

12. A method of handling email comprising
- receiving an email having meta-data, the meta-data comprising at least a recipient,
- storing the email in a storage device
wherein, the method further comprises
- extracting the meta-data from the email, and
- storing in a recipient's mailbox the meta-data and a pointer to the email in the storage device.

13. A computer program comprising computer program code means adapted to perform all the steps of claim 12 when the computer program is run on a computer.

14. A computer program as claimed in claim 13 embodied on a computer readable medium.
